# FASCICULE DE BREVET EUROPEEN

(11) **EP 3 727 913 B1**
(45) Date de publication et mention de la délivrance du brevet: **12.04.2023**
(21) Numéro de dépôt: 18804344.2
(22) Date de dépôt: 26.11.2018
(51) Int. Cl.: B60H 1/00, B60H 1/34, B60K 35/00, B60K 37/06

(54) **DISPOSITIF D'AÉRATION COMPACT À EFFET COANDA POUR VÉHICULE AUTOMOBILE INTÉGRANT UN MODULE DE CONTROLE POURVU D'UNE FAÇADE DE COMMANDE**
KOMPAKTE LÜFTUNGSVORRICHTUNG MIT COANDA-EFFEKT FÜR EIN KRAFTFAHRZEUG MIT EINEM MIT EINER BEDIENUNGSTAFEL VERSEHENEN STEUERMODUL
COMPACT COANDA EFFECT VENTILATION DEVICE FOR MOTOR VEHICLE INCORPORATING A CONTROL MODULE PROVIDED WITH A CONTROL PANEL

(30) Priorité: 21.12.2017 FR 1762883
(43) Date de publication de la demande: 28.10.2020
(73) Titulaire: PSA Automobiles SA, 78300 Poissy (FR); Faurecia Intérieur Industrie, 92000 Nanterre (FR)
(72) Inventeur: DUTOT, Christophe, 94400 VITRY SUR SEINE (FR); BARRE, Philippe, 94340 JOINVILLE LE PONT (FR); BRUNARD, Christophe, 92270 BOIS COLOMBES (FR); BEAUREGARD, Julien, 60530 MESNIL EN THELLE (FR); LE FLOHIC, Jean Christophe, 92500 RUEIL-MALMAISON (FR)
(86) Numéro de dépôt international: PCT/EP2018/082501
(87) Numéro de publication internationale: WO 2019/120891

(56) Documents cités:
- EP-A2- 3 085 559
- DE-A1-102004 014 899
- DE-A1-102012 020 539
- DE-A1-102017 111 011
- DE-B4-102004 014 899
- FR-A1- 3 028 810
- FR-A1- 3 031 935

## Description

### Domaine de l'invention

La présente invention concerne d'une manière générale les dispositifs d'aération destinés à diffuser dans l'habitacle d'un véhicule automobile de l'air provenant du système de chauffage, de ventilation et de climatisation dudit véhicule.

### Arrière-plan de l'invention

Un tel dispositif d'aération, connu par exemple de la demande de brevet française FR 2 956 065, comporte classiquement au moins un aérateur comprenant un canal délimité par un corps creux et apte à canaliser un flux d'air jusqu'à une ouverture de sortie débouchant dans l'habitacle du véhicule, ainsi qu'au moins une ailette de déflexion montée rotative dans ce canal à proximité de l'ouverture de sortie. L'aérateur comprend également un actionneur relié mécaniquement à cette ou à ces ailettes et permettant à l'utilisateur de commander sa rotation afin d'orienter le flux d'air en sortie du corps.

Un volet d'occultation pilotable par un mécanisme de commande dédié est en outre généralement monté pivotant dans le conduit en amont de cette ou de ces ailettes entre une position d'ouverture maximale et une position de fermeture empêchant le flux d'air canalisé de s'échapper au travers de l'ouverture de sortie.

Ces aérateurs qui débouchent généralement sur la planche de bord du véhicule sont inesthétiques et impactent négativement le niveau de qualité perçu par les utilisateurs.

Afin de palier à ces inconvénients, la demande de brevet américaine 2014/0357179 décrit un dispositif d'aération mettant en oeuvre le phénomène physique connu sous le nom d'effet « Coanda » selon lequel un flux guidé en s'attachant à des surfaces courbes présente une faible perte de charge et génère ainsi peu de bruit. Le document DE102017111011 décrit aussi un tel dispostif d'aération.

Il présente l'avantage d'être particulièrement esthétique (seule l'extrémité du noyau demeurant visible des usagers tandis que les autres éléments mécaniques étant quant à eux dissimulés) ce qui permet d'améliorer sensiblement le niveau de qualité perçue de l'ensemble de la planche de bord du véhicule.

Le pilotage d'un tel dispositif d'aération est classiquement assuré par l'intermédiaire d'un module de contrôle intégré dans la console centrale du véhicule. Une tel module, décrit par exemple dans la demande internationale WO 00/21765, comprend une pluralité de moyens de commande permettant de régler certains paramètres tels que le débit d'air de ventilation sortant de l'aérateur et la température de consigne pour la zone de l'habitacle traitée par cet aérateur.

Le document DE102012020539 décrit un aérateur comportant un module de contrôle intégré ainsi qu'un écran, permettant d'actionner des fonctions du système de climatisation et de ventilation du véhicule.

Le document FR3031935A1 décrit un dispositif comportant deux aérateurs disposés côte à côte en étant séparés par une cloison et étant destinés à diffuser de l'air dans l'habitacle du véhicule automobile.

Ce dispositif comporte une façade constituant un élément de séparation intercalé entre les deux aérateurs.

Ces modules de contrôle présentent toutefois l'inconvénient d'être encombrants, notamment au niveau de la console centrale du véhicule où ils réduisent considérablement l'espace disponible.

### Objet et résumé de l'invention

La présente invention vise donc à améliorer la situation.

Elle propose à cet effet, un dispositif d'aération pour système de chauffage, de ventilation et de climatisation d'un véhicule automobile, comportant au moins deux aérateurs comprenant chacun :
- un canal apte à canaliser un flux d'air depuis une ouverture d'entrée jusqu'à une ouverture de sortie débouchant sur une enceinte ;
- un noyau creux de guidage d'air logé dans ledit canal et définissant deux surfaces de guidage d'air à l'opposé l'une de l'autre, les deux dites surfaces de guidage et ledit canal délimitant ainsi deux voies d'écoulement aptes à transporter respectivement vers ladite ouverture de sortie une première et une seconde quantité d'air en provenance de ladite ouverture d'entrée ;
- une première ailette montée pivotante en amont dudit noyau de guidage et agencée de sorte à permettre d'ajuster en fonction de sa position le ratio entre les première et seconde quantités d'air ;
caractérisé en ce que ledit dispositif d'aération comporte un module de contrôle intégré au moins partiellement dans le noyau de guidage d'au moins un dit aérateur, ledit module de contrôle comprenant une façade de commande constituée au moins partiellement par une paroi d'extrémité aval dudit noyau de guidage et étant dotée de moyens de commande permettant de piloter ledit système de chauffage, de ventilation et de climatisation. Les deux dits aérateurs sont disposés côte à côte en étant séparés par une cloison et étant destinés à diffuser de l'air dans l'habitacle du véhicule automobile, respectivement du côté conducteur et du côté passager avant, et la façade s'étend de manière continue entre les deux dits aérateurs.

En intégrant au moins partiellement le module de contrôle du système de chauffage, de ventilation et de climatisation dans le noyau de guidage d'un ou plusieurs aérateurs, le dispositif d'aération selon l'invention permet, sans impacter la section de passage du flux l'air délivré dans l'habitacle par ce ou ces aérateurs, de libérer de l'espace, notamment au niveau de la console centrale du véhicule pour y implanter par exemple des zones d'accueil pour appareils nomades ou des rangements supplémentaires.

Selon des caractéristiques préférées dudit dispositif d'aération selon l'invention :
- lesdits moyens de commande comportent au moins un bouton poussoir et une bague de réglage montée rotative autour dudit bouton poussoir ;
- lesdits moyens de commande comportent au moins un curseur monté coulissant ;
- lesdits moyens de commande comportent au moins une zone tactile de commande ;
- ladite façade de commande comporte au moins une zone d'affichage pourvue d'un ou plusieurs indicateurs lumineux affichant chacun la valeur sélectionnée de l'un des paramètres de réglage dudit système de chauffage, de ventilation et de climatisation ;
- ledit module de contrôle comporte des moyens de commande permettant de piloter d'autres dispositifs fonctionnels dudit véhicule ;
- le au moins dit aérateur comporte une rangée de secondes ailettes de déflexion parallèles montées pivotantes dans ledit canal selon des axes de rotation perpendiculaires à celui de ladite première ailette et étant solidaires en rotation par l'intermédiaire de moyens de liaison les reliant entre elles ;

L'invention vise également sous un second aspect, un véhicule automobile comportant un tel dispositif d'aération.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective d'un dispositif d'aération pour véhicule automobile selon l'invention ;
- la figure 2 est une vue de coupe en perspective du dispositif d'aération de la figure 1 prise selon un plan vertical axial ;
- la figure 3 représente une vue de section du dispositif d'aération de la figure 1 prise selon un plan vertical axial situé au niveau du curseur de réglage de l'orientation des ailettes de l'aérateur du passager avant ;
- la figure 4 est une vue de section du dispositif d'aération de la figure 1 prise selon un plan vertical axial situé au niveau d'un bouton poussoir de commande du module de contrôle du système de chauffage, de ventilation et de climatisation.

### Description détaillée d'un mode préféré de réalisation

Le dispositif d'aération 1 représenté sur les figures est destiné à être implanté en partie centrale de la planche de bord (non représentée) d'un véhicule automobile afin de diffuser dans l'habitacle de ce véhicule l'air pulsé provenant du système de chauffage, de ventilation et de climatisation (CVC) de ce véhicule.

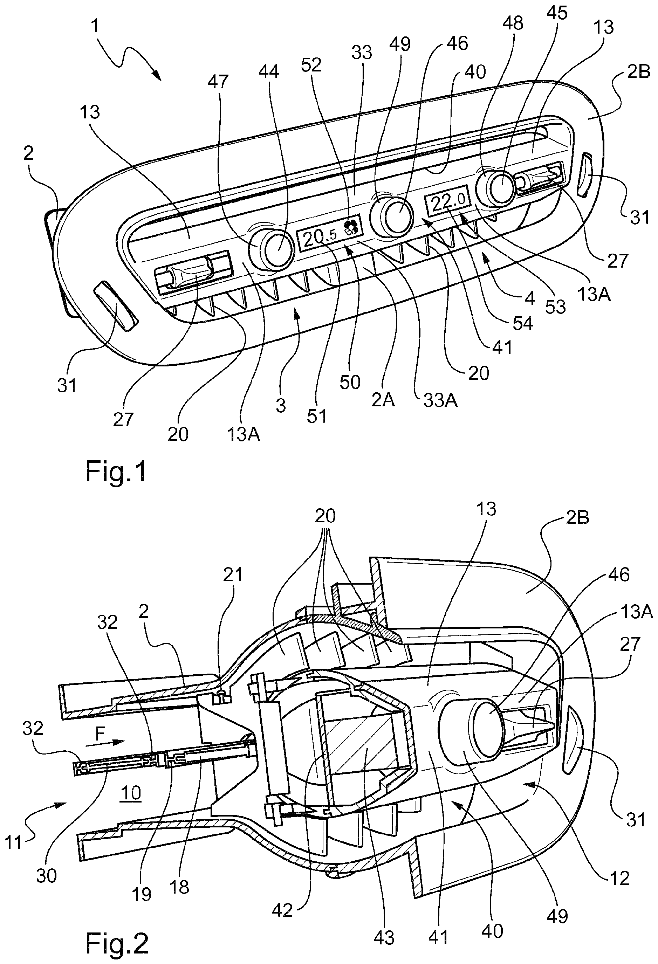

Comme illustré sur la figure 1, le dispositif d'aération 1 comporte un corps creux 2 logeant deux aérateurs semblables 3, 4 disposés côte à côte en étant séparés par une cloison 2A et étant destinés à diffuser de l'air dans l'habitacle du véhicule automobile, respectivement du côté conducteur et du côté passager avant.

Chaque aérateur 3, 4 comprend un canal 10 délimité par le corps 2 et apte à canaliser un flux d'air F depuis une ouverture d'entrée 11 jusqu'à une ouverture de sortie 12 débouchant dans l'habitacle du véhicule (figure 2).

Dans la suite de cette description, les termes « amont » et « aval » utilisés pour caractériser la position de certains éléments du dispositif d'aération 1 seront à considérer par rapport au sens de circulation du flux d'air F dans les canaux 10.

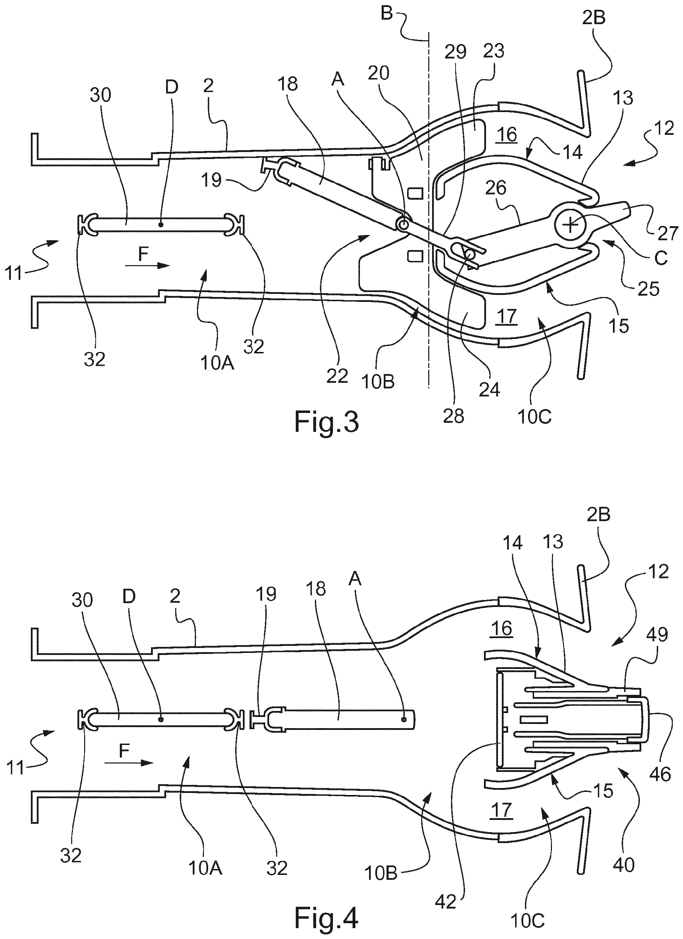

Tel qu'illustré sur la figure3, chaque canal 10 comprend successivement, depuis l'ouverture d'entrée 11 vers celle de sortie 12, un tronçon amont 10A, un tronçon intermédiaire 10B et un tronçon aval 10C.

Le tronçon amont 10A a une section transversale rectangulaire constante sur l'ensemble de sa longueur.

Le tronçon intermédiaire 10B présente une section s'évasant dans le sens de circulation du flux d'air F dans le canal 10, tandis que celle du tronçon aval 10C se rétrécie dans le sens de circulation du flux d'air F.

Chaque aérateur 3, 4 comporte également un noyau creux de guidage d'air 13 présentant de préférence une section sensiblement ovoïdale et étant logé dans les tronçons intermédiaire 10B et aval 10C d'un canal correspondant 10 en étant avantageusement lié rigidement avec ces derniers.

Chaque noyau 13 définit une première surface de guidage d'air 14 et une seconde surface de guidage d'air 15 s'étendant symétriquement à l'opposé l'une de l'autre par rapport au plan horizontal médian du canal correspondant 10.

Les portions supérieure et inférieure des tronçons 10B, 10C de chaque canal 10 situées respectivement en regard des premières et secondes surfaces de guidage 14, 15 s'étendent parallèlement à ces dernières de sorte à délimiter deux voies d'écoulement supérieure 16 et inférieure 17 de section sensiblement constante et symétriques par rapport au plan horizontal médian du canal 10.

Ces voies 16 et 17 sont aptes à transporter respectivement vers l'ouverture de sortie 12 une première et une seconde quantité d'air en provenance de l'ouverture d'entrée 11.

Chaque aérateur 3, 4 comporte également une ailette rectangulaire de déflexion 18 montée pivotante dans le tronçon amont du canal 10 à proximité du noyau de guidage 13 et selon un axe transversal horizontal de rotation A.

Cette ailette 18 est agencée de sorte à permettre, en faisant varier son inclinaison, d'ajuster le ratio entre les première et seconde quantités d'air et donc la direction de sortie du flux d'air F par rapport à l'horizontale.

Ainsi, lorsque l'ailette 18 occupe sa position extrême haute illustrée par la figure 3, la voie d'écoulement supérieure 16 est fermée. La totalité du flux d'air F circule alors dans la voie d'écoulement inférieure 17 et ressort de l'ouverture de sortie 12 en étant dirigée vers haut.

Inversement, lorsque l'ailette 18 occupe sa position extrême basse, la voie d'écoulement inférieure 17 est fermée. La totalité du flux d'air F circule alors dans la voie d'écoulement supérieure 16 et ressort de l'ouverture de sortie 12 en étant dirigée vers bas.

Lorsque l'ailette 18 s'étend horizontalement dans une position située à mi-chemin entre ces deux positions extrême haute et extrême basse (voir figure 4), la même quantité d'air circule dans les deux voies d'écoulement supérieure 16 et inférieure 17 de sorte qu'en sortie le flux d'air F est dirigé sensiblement horizontalement.

Afin d'obtenir une étanchéité quasi-parfaite et d'éviter l'émission de sifflement désagréables dans l'habitacle du véhicule lorsqu'elle vient occuper sa position extrême haute ou extrême basse, chaque ailette 18 est pourvue d'une lèvre élastiquement déformable 19 en matériau élastomère surmoulée à son extrémité amont.

Tel qu'illustré sur les figures 2 et 3, chaque aérateur 3, 4 comporte en outre une rangée d'ailettes de déflexion verticales parallèles 20 montées pivotantes dans les tronçons amont 10A et intermédiaire 10B du canal 10 selon des axes verticaux parallèles B, et étant solidaires en rotation par l'intermédiaire d'une tige de liaison 21 les reliant entre elles.

Ces ailettes verticales 20 présentent une portion amont pourvue d'une échancrure centrale 22 en V traversée par la portion aval de l'ailette 18 et dont les dimensions sont adaptées pour ne pas perturber le pivotement de cette ailette, ainsi qu'une portion aval formée de deux bras courbes 23, 24 logés dans les deux voies d'écoulements 16, 17 et dont les profils correspondent sensiblement aux profils incurvés ceux de ces voies.

La variation de l'inclinaison de ces ailettes verticales 20 permet ainsi d'ajuster la direction de sortie du flux d'air F par rapport au plan vertical médian du dispositif d'aération 1.

Le déplacement à pivotement des ailettes verticales 20 de chaque aérateur 3, 4 est assuré par l'intermédiaire d'un mécanisme de commande respectif 25 implanté à proximité de son extrémité externe.

Chacun des mécanismes de commande 25 comporte un bras 26 logé dans le noyau de guidage 13 de l'aérateur correspondant 3, 4 dont l'extrémité aval est montée à translation le long d'un axe transversal horizontal C et à pivotement autour de ce même axe C.

Cette extrémité aval du bras 26 est prolongée par un curseur 27 saillant de la portion externe de la paroi plane verticale 13A formant l'extrémité aval biseautée du noyau 13 et permettant à l'utilisateur d'actionner ce bras 26 à translation et à pivotement (voir figures 1 et 2).

L'extrémité amont du bras 26 porte un doigt de guidage 28 s'étendant transversalement et étant couplé mécaniquement avec une fourchette 29 liée rigidement à une ailette 18 correspondante et s'étendant dans son prolongement aval, de sorte que le pivotement vers le haut ou vers le bas du curseur 27 entraine celui de cette ailette 18 dans le même sens (figure 3).

Chaque mécanisme de commande 25 comporte également une biellette (non visible sur les figures) reliant de manière articulée le curseur 27 aux ailettes verticales 20 de l'aérateur correspondant 3, 4, de sorte que la translation de ce curseur 27 dans un sens entraine via cette biellette le pivotement dans le même sens des ailettes verticales 20.

Tel qu'illustré sur les figures 3 et 4, chaque aérateur 3, 4 comporte en outre un volet d'occultation respectif 30 monté pivotant dans le tronçon amont du canal correspondant 10 en amont de l'ailette de déflexion 18 et selon un axe transversal horizontal de rotation D.

Chaque volet 30 est pilotable par un mécanisme de commande dédié actionnable par une molette respective 31 saillant partiellement d'une portion latérale correspondante de la lunette périphérique 2B bordant l'extrémité aval du corps creux 2 (voir figures 1 et 2), entre une position horizontale d'ouverture maximale et une position verticale de fermeture obturant entièrement le canal 10 de sorte à empêchant le flux d'air canalisé F de s'échapper au travers de l'ouverture de sortie 12.

Afin d'obtenir une étanchéité quasi-parfaite et d'éviter l'émission de sifflement désagréables dans l'habitacle du véhicule lorsqu'il vient occuper sa position de fermeture, chaque volet d'occultation 30 est pourvu de deux lèvres élastiquement déformables 32 en matériau élastomère surmoulées à ses deux extrémités.

Tel que représenté sur la figure 1 et afin d'assurer une continuité d'aspect entre les parties aval visibles des deux noyaux creux de guidage 13, ces dernières sont reliées l'une à l'autre par un élément central de liaison creux 33 de section identique.

Selon l'invention et comme illustré sur la figure 1, le dispositif d'aération 1 comporte un module de contrôle 40 du système de chauffage, de ventilation et de climatisation (CVC) du véhicule, intégré dans les deux noyaux creux de guidage 13 et dans l'élément central de liaison 33.

Ce module de contrôle 40 comporte une façade de commande 41 s'étendant transversalement de manière continue entre les deux aérateurs 3, 4 (plus précisément entre les deux curseurs 27 de ces derniers) et étant constituée par les trois parois d'extrémités aval 13A, 33A des deux noyaux creux de guidage 13 et de l'élément central de liaison 33.

Le dispositif 40 comprend également une carte électronique à circuits imprimés (PCB) 42 ainsi qu'au moins une boîte à lumière 43 logées dans les deux noyaux creux de guidage 13 et l'élément central de liaison 33, le ou les boîtes à lumière 43 étant intercalées entre la face interne de la façade de commande 41 et la carte électronique 42.

Tel qu'illustré sur la figure 1, la façade de commande 41 qui constitue la partie visible et accessible du module de contrôle 40, est pourvue de moyens de commande comprenant trois boutons poussoirs 44, 45, 46 ainsi que trois bagues de réglage 47, 48, 49 montée rotatives autour de ces derniers.

Le premier bouton poussoir 44, implanté à proximité du curseur 27 de l'aérateur 3, permet à l'usager d'activer ou de désactiver le mode de fonctionnement automatique du système CVC.

Le deuxième bouton poussoir 45, implanté à proximité du curseur 27 de l'aérateur 4, permet à l'usager d'activer ou de désactiver l'air conditionné.

Le troisième bouton poussoir 46, implanté au niveau du plan vertical médian de la façade 41, permet à l'usager d'activer ou de désactiver le système CVC.

La première bague rotative 47 entourant le bouton poussoir 44 permet à l'usager de régler la température de consigne du côté conducteur.

La deuxième bague rotative 48 entourant le bouton poussoir 45 permet à l'usager de régler la température de consigne du côté du passager avant.

La troisième bague rotative 49 entourant le bouton poussoir 46 permet à l'usager d'ajuster le débit d'air du système CVC.

La façade de commande 41 est avantageusement réalisée dans un matériau thermoplastique transparent teinté fumé noir, tels que le polycarbonate (PC) ou le polyméthacrylate de méthyle (PMMA), ce dernier offrant l'avantage de présenter une excellente transparence et d'être peu sensible aux rayures.

Cette façade 41 intègre en outre plusieurs zones d'affichage 50, 53 ménagées chacune entre deux couples boutons/bagues et étant pourvues d'un ou plusieurs indicateurs lumineux 51, 52, 53 affichant chacun la valeur sélectionnée d'un paramètre de réglage du système CVC.

La première zone d'affichage 50 s'étendant entre le premier et le deuxième boutons poussoir 44, 45 comprend :
- un premier indicateur lumineux 51, implanté à proximité du premier bouton poussoir 44, se présentant sous la forme d'un afficheur numérique à deux chiffres et une décimale indiquant la température de consigne sélectionnée du côté conducteur ; et
- un deuxième indicateur lumineux 52, implanté à proximité du troisième bouton poussoir 46, se présentant sous la forme d'un pictogramme fonctionnel représentant une hélice dont le nombre de demipales affichées (compris en l'espèce entre zéro et huit) traduit le débit d'air sélectionné.

La seconde zone d'affichage 53 s'étendant entre les deuxième et troisième boutons poussoir 45, 46 comprend un troisième indicateur lumineux 54 se présentant sous la forme d'un afficheur numérique à deux chiffres et une décimale indiquant la température de consigne sélectionnée du côté du passager avant.

La carte électronique 42 comporte une multitude de détecteurs électriques aptes à commuter lors de l'actionnement par l'usager des boutons poussoirs 44, 45, 46 et des bagues 47, 48, 49 ainsi qu'une pluralité de diodes électroluminescentes permettant de générer un retroéclairage des indicateurs lumineux 51, 52 et 54.

Selon des variantes de réalisation non représentées, le dispositif d'aération comporte un nombre de d'aérateurs différent et par exemple égal à un ou trois.

Selon d'autres variantes de réalisation non représentées, le type et/ou le nombre des organes de commande mécaniques sont différents (les boutons et/ou les molettes pouvant par exemple être remplacés par des curseurs montés coulissants transversalement).

Selon encore d'autres variantes de réalisation non représentées, les moyens de commande de la façade de commande 41 comprennent au moins une zone tactile de commande dotée de touches et/ou boutons tactiles. Dans un tel cas de figure, le module de contrôle comprend un film capacitif ou résistif apposé contre la face amont de la façade 41 et relié via une nappe de liaison électrique à la carte électronique 42.

Selon encore d'autres variantes de réalisation non représentées :
- le module de contrôle comporte également des moyens de commande permettant de piloter d'autres dispositifs du véhicule tels que par exemple le dégivrage du pare-brise avant et de la lunette arrière et/ou d'arrêt d'urgence ;
- la façade de commande présente une animation lumineuse par exemple de type chenillard ; et/ou
- les extrémités aval des noyaux de guidage et de l'élément de liaison présentent un profil en pointe : la façade de commande étant alors constituée par les parois supérieures continues de ces extrémités.

Bien entendu, la présente invention ne se limite pas aux formes de réalisation décrites et représentées, mais englobe également toutes les variantes d'exécution à la portée de l'homme du métier, dans le cadre des revendications.

## Revendications

1. Dispositif d'aération pour système de chauffage, de ventilation et de climatisation d'un véhicule automobile, comportant au moins deux aérateurs (3, 4) comprenant chacun :
- un canal (10) apte à canaliser un flux d'air (F) depuis une ouverture d'entrée (11) jusqu'à une ouverture de sortie (12) débouchant sur une enceinte ;
- un noyau creux de guidage d'air (13) logé dans ledit canal (10) et définissant deux surfaces de guidage d'air (14, 15) à l'opposé l'une de l'autre, les deux dites surfaces de guidage (14, 15) et ledit canal (10) délimitant ainsi deux voies d'écoulement (16, 17) aptes à transporter respectivement vers ladite ouverture de sortie (12) une première et une seconde quantité d'air en provenance de ladite ouverture d'entrée (11) ;
- une première ailette (18) montée pivotante en amont dudit noyau de guidage (13) et agencée de sorte à permettre d'ajuster en fonction de sa position le ratio entre les première et seconde quantités d'air ;
**caractérisé en ce que** ledit dispositif d'aération comporte en outre un module de contrôle (40) intégré au moins partiellement dans le noyau de guidage (13) d'au moins un dit aérateur (3, 4), ledit module de contrôle (40) comprenant une façade de commande (41) constituée au moins partiellement par une paroi d'extrémité aval (13A) dudit noyau de guidage (13) et étant dotée de moyens de commande (44, 45, 46, 47, 48, 49) permettant de piloter ledit système de chauffage, de ventilation et de climatisation, les deux dits aérateurs (3, 4) étant disposés côte à côte en étant séparés par une cloison (2A) et étant destinés à diffuser de l'air dans l'habitacle du véhicule automobile respectivement du côté conducteur et du côté passager avant, la façade (41) s'étendant de manière continue entre les deux dits aérateurs (3, 4).

2. Dispositif d'aération selon la revendication 1, **caractérisé en ce que** lesdits moyens de commande comportent au moins un bouton poussoir (44, 45, 46) et une bague de réglage (47, 48, 49) montée rotative autour dudit bouton poussoir (44, 45, 46).

3. Dispositif d'aération selon l'une des revendications 1 ou 2, **caractérisé en ce que** lesdits moyens de commande comportent au moins un curseur monté coulissant.

4. Dispositif d'aération selon l'une des revendications 1 à 3, **caractérisé en ce que** lesdits moyens de commande comportent au moins une zone tactile de commande.

5. Dispositif d'aération selon l'une des revendications 1 à 4, **caractérisé en ce que** ladite façade de commande (41) comporte au moins une zone d'affichage (50, 53) pourvue d'un ou plusieurs indicateurs lumineux (51, 52, 54) affichant chacun la valeur sélectionnée de l'un des paramètres de réglage dudit système de chauffage, de ventilation et de climatisation.

6. Dispositif d'aération selon l'une des revendications 1 à 5, **caractérisé en ce que** ledit module de contrôle comporte des moyens de commande permettant de piloter d'autres dispositifs fonctionnels dudit véhicule.

7. Dispositif d'aération selon l'une des revendications 1 à 6, **caractérisé en ce que** le au moins dit aérateur (3, 4) comporte une rangée de secondes ailettes de déflexion parallèles (20) montées pivotantes dans ledit canal (10) selon des axes de rotation (B) perpendiculaires à celui de ladite première ailette (18) et étant solidaires en rotation par l'intermédiaire de moyens de liaison (21) les reliant entre elles.

8. Véhicule automobile **caractérisé en ce qu'**il comporte un dispositif d'aération selon l'une des revendications 1 à 7.

## Patentansprüche

1. Belüftungseinrichtung für eine Heizungs-, Lüftungs- und Klimaanlage eines Kraftfahrzeugs mit mindestens zwei Lüftungseinrichtungen (3, 4), die jeweils Folgendes umfassen:
- einem Kanal (10), der einen Luftstrom (F) von einer Einlassöffnung (11) zu einer in ein Gehäuse mündenden Auslassöffnung (12) leiten kann;
- ein in dem Kanal (10) gelagerter hohler Luftführungskern (13), der zwei einander gegenüberliegende Luftführungsflächen (14, 15) definiert, wodurch die beiden Führungsflächen (14, 15) und der Kanal (10) zwei Strömungswege (16, 17) begrenzen, die jeweils zu dem genannten Kanal führen können Auslassöffnung (12) eine erste und eine zweite Luftmenge von der Einlassöffnung (11);
- eine erste Rippe (18), die vor dem Führungskern (13) schwenkbar angebracht ist und so angeordnet ist, dass das Verhältnis zwischen der ersten und der zweiten Luftmenge lageabhängig einstellbar ist;
Die Belüftungseinrichtung umfasst ferner ein Steuermodul (40), das zumindest teilweise in den Führungskern (13) mindestens eines der Lüfter (3, 4) integriert ist, wobei das Steuermodul (40) eine Steuerfassade (41) umfasst, die zumindest teilweise durch eine stromabwärtige Endwand (13A) des Führungskerns (13) gebildet ist und mit Steuermitteln (44, 45, 46, 47, 48, 49) zum Ansteuern der Heiz-, Lüftungs- und Klimaanlage,
die beiden genannten Lüfter (3, 4) nebeneinander angeordnet sind und durch eine Trennwand (2A) getrennt sind und dazu bestimmt sind, Luft in den Innenraum des Kraftfahrzeugs auf der Fahrerseite bzw. auf der Beifahrerseite zu verteilen, wobei sich die Fassade (41) kontinuierlich zwischen den beiden genannten Lüfter (3, 4) erstreckt.

2. Belüftungsvorrichtung nach Anspruch 1, **dadurch gekennzeichnet, dass** die Steuermittel mindestens einen Druckknopf (44, 45, 46) und einen Stellring (47, 48, 49) umfassen, der um den Druckknopf (44, 45, 46) drehbar gelagert ist.

3. Belüftungsvorrichtung nach einem der Ansprüche 1 oder 2, **dadurch gekennzeichnet, dass** die Steuermittel mindestens einen gleitend montierten Schieber umfassen.

4. Belüftungsvorrichtung nach einem der Ansprüche 1 bis 3, **dadurch gekennzeichnet, dass** die Steuermittel mindestens einen berührungsempfindlichen Steuerbereich umfassen.

5. Belüftungsvorrichtung nach einem der Ansprüche 1 bis 4, **dadurch gekennzeichnet, dass** die Steuerfassade (41) mindestens einen Anzeigebereich (50, 53) aufweist, der mit einem oder mehreren Lichtanzeigern (51, 52, 54) versehen ist, die jeweils den ausgewählten Wert eines der Einstellparameter des Heiz-, Lüftungs- und Klimasystems anzeigen.

6. Belüftungsvorrichtung nach einem der Ansprüche 1 bis 5, **dadurch gekennzeichnet, dass** das Steuermodul Steuermittel umfasst, die es ermöglichen, weitere Funktionseinrichtungen des Fahrzeugs zu steuern.

7. Belüftungsvorrichtung nach einem der Ansprüche 1 bis 6, **dadurch gekennzeichnet, dass** der mindestens eine Lüfter (3, 4) eine Reihe von zweiten parallelen Ablenkflügeln (20) aufweist, die in dem Kanal (10) drehbar in Drehachsen (B) gelagert sind, die senkrecht zu der des ersten Flügels (18) sind und über Verbindungsmittel (21) drehfest sind (1) Die Mitgliedstaaten können die Mitgliedstaaten untereinander verbinden.

8. Kraftfahrzeug, **dadurch gekennzeichnet, dass** es eine Belüftungseinrichtung nach einem der Ansprüche 1 bis 7 aufweist.

## Claims

1. A ventilation system for heating, ventilation and air conditioning of a motor vehicle, comprising at least two aerators (3, 4) each comprising:
- a channel (10) capable of channeling an air flow (F) from an inlet opening (11) to an outlet opening (12) leading to a enclosure;
- a hollow core of air guidance (13) housed in the said channel (10) and defining two air guidance surfaces (14, 15) opposite each other, the two so-called guidance surfaces (14, 15) and the said channel (10) thus defining two flow paths (16, 17) suitable for transport to the said channel, respectively (12) an initial and a second quantity of air from the said inlet opening (11);
- a first wing (18) swivel mounted upstream of the guidance core (13) and arranged so that the ratio between the first and second quantities of air can be adjusted according to its position;
**characterized in** addition that aeration device includes a control module (40) integrated at least partially into the guidance core (13) of at least one said aerator (3, 4), the control module (40) comprising a control facade (41) consisting at least partly of a downstream end wall (13A) of the said guidance core (13) and equipped with means of control (44, 45, 46, 47, 48, 49) enabling the said heating, ventilation and air conditioning system to be operated,
the two so-called aerators (3, 4) being arranged side by side separated by a bulkhead (2A) and intended to diffuse air in the passenger compartment of the motor vehicle on the driver side and on the front passenger side respectively, the facade (41) extending continuously between the two so-called aerators (3, 4).

2. The aeration device according to Claim 1, **characterized in that** the means of control include at least one push button (44, 45, 46) and an adjustment ring (47, 48, 49) rotating around the push button (44, 45, 46).

3. A ventilation device according to one of the claims 1 or 2, **characterized by** that means of control having at least one sliding mounted cursor.

4. A ventilation device according to one of the claims 1 to 3, **characterized by** the fact that the means of control include at least one touch-control area.

5. A ventilation device according to one of the claims 1 to 4, **characterized by** that control facade (41) having at least one display area (50, 53) with one or more light indicators (51, 52, 54) each displaying the selected value of one of the parameters of adjustment of the said heating, ventilation and air conditioning system.

6. An aeration device according to one of the claims 1 to 5, **characterized by** the fact that the control module contains means of control allowing the operation of other functional devices of the vehicle.

7. A ventilation device according to one of the claims 1 to 6, **characterized by** the fact that at least the said aerator (3, 4) has a row of parallel deflection wings (20) mounted swiveling in the said channel (10) on rotational axes (B) perpendicular to that of the said first wing (18) and being solidary in rotation via means of connection (20) 1) connecting them together.

8. Motor vehicle characterized as having an aeration device according to one of the claims 1 to 7.
